(19)

Europäisches Patentamt
European Patent Office
Office européen des brevets

(11) **EP 3 617 956 A1**

(12) **EUROPEAN PATENT APPLICATION**

(43) Date of publication:
**04.03.2020 Bulletin 2020/10**

(51) Int Cl.:
**G06N 3/06** *(2006.01)*  **G06N 10/00** *(2019.01)*
**G06N 3/063** *(2006.01)*

(21) Application number: **18382638.7**

(22) Date of filing: **31.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ozcariz, Ignacio**
**28006 Madrid (ES)**

(72) Inventor: **Ozcariz, Ignacio**
**28006 Madrid (ES)**

Remarks:
Claims filed after the date of filing of the application (Rule 68(4) EPC).

(54) **QUANTUM INFORMATION PROCESSOR BASED ON DYNAMIC NEURAL NETWORKS**

(57)    A Quantum Information Processor (Fig. 1) comprises a series of Nodes (1,2,3,4,5,6,7,8) and another series of edges (9,10,11,12,13,14,15,16,17,18,19,20) which form with the link 21 an Artificial Neural Network (ANN) which supports dynamical transitions at the Nodes and Edges and so is named Dynamic Neural Network (DNN). The quantum states used to represent a qubit may be defined as the signal present at the Nodes 1 and 8 linked by the edge 21.

The Nodes process the signals that arrived via the Edges with a "Sum" operation. The Edges process the signals that goes thru them with a "Multiplication" operation realized via some devices controlled from the exterior of the DNN. Several Unitary Transformations $U_H$ will be defined with the aid of the multiplicative devices applied to the Edges to obtain the States' changeset. Intrinsically the DNN could be considered decouple from the environment as a Quantum Information Processor.

FIG 1

EP 3 617 956 A1

**Description**

**BACKGROUND OF THE INVENTION**

**Field of the Invention**

The present invention relates to a Quantum Information Processor, and more particularly to a method and an apparatus based on Dynamic Neural Networks that are Artificial neural networks that support time dependent complex signals in its Nodes and Edges.

**Description of Prior Art**

Quantum information processing covers a variety of fields where quantum mechanical effects are used to process information in applications such as computation and communications. An introduction to this subject is found in M. A. Nielsen, I. L. Chuang, Quantum Computation and Quantum Information (Cambridge Univ. Press, Cambridge, 2000).

Quantum computation involves manipulation of data in form of quantum bits or "qubits". Whereas in classical computation a bit of information is used to represent only one of two possible logical states, namely "1" or "0", in quantum computation, a qubit can represent both logical states simultaneously as a superposition of quantum states. This property gives rise to powerful computational parallelism. Algorithms which exploit this parallelism have been developed, for example, for efficiently factorizing large integers. A very last overview of quantum computing is found in Quantum Computing in the NISQ Era and Beyond by John Preskill (Institute for Quantum Information and Matter and Walter Burke Institute for Theoretical Physics, California Institute of Technology, Pasadena CA 91125, USA) 30 July 2018 - arXiv:1801.00862v3 [quant-ph].

Using the so call Dirac notation, the qubit is defined by a basis consisting of two states, which are denoted $|0>$ and $|1>$. Thus, the state of the qubit can be represented as:

$$|\varphi> = a|0> + b|1>$$

where a and b are complex number coefficients. The qubit can store information as a combination of 0 and 1, using different values of a and b. However, a measurement of the qubit will cause it to project onto $|0>$ or $|1>$ state and return the result $|0>$ or $|1>$ respectively. The probabilities of returning these values are $|a|^2$ and $|b|^2$ respectively. In this way, a system comprised of one qubit can store two binary values, 0 and 1, at the same time, although recovery of any stored information is restricted.

A system comprised of two qubits can store up to four binary values simultaneously because of superposition. A system comprising a pair of qubits, labelled A and B, is defined by a basis of four states which can be written as $|0>_A|0>_B$, $|0>_A|1>_B$, $|1>_A|0>_B$ and $|1>_A|1>_B$. In the same way a single qubit can store information as a superposition of $|0>$ and $|1>$, a pair of qubits can store information as a superposition of the basis states $|0>_A|0>_B$, $|0>_A|1>_B$, $|1>_A|0>_B$ and $|1>_A|1>_B$. For example, the two qubits may be prepared such that:

$$|\varphi>_{AB} = 2^{-U} ( |0>_A|0>_B + |0>_A|1>_B + |1>_A|0>_B + |1>_A|1>_B )$$

Thus, four binary values 00, 01, 10 and 11 are encoded simultaneously. In this case, the two qubits exist independently of one another, such that the result of a easurement of qubit A is independent of the result of a measurement of qubit B.

However, if the two qubits are entangled, then the two measurements will become correlated. Entanglement allows qubits to be prepared such that:

$$|\varphi>_{AB} = 2^{-U} ( |0>_A|0>_B + |1>_A|1>_B)$$

Thus, binary values 00 and 11 are encoded simultaneously. However, if qubit A is measured and a result 0 is returned, then the outcome of a subsequent measurement of qubit B will, with certainty, also be 0.

A system comprised of three qubits is defined by a basis of eight states which can store eight binary numbers, 000, 001, ..., 111 simultaneously.

In general, a system of n qubits has a basis of $2^n$ states and can be used to represent numbers from 0 to $2^{n-1}$.

Thus, a Quantum Information Processor has a clear advantage over its classical counterpart in that it that it can store $2^n$ numbers simultaneously, whereas a classical computer with an n-bit input register can only store one of these numbers at a time.

It is the ability to store many numbers simultaneously using superposition of quantum states which makes quantum parallel processing possible. Using a single computational step, it is possible to perform the same mathematical operation on $2^n$ different numbers at the same time and produce a superposition of corresponding output states. To achieve the same result in a classical computer, the computational step would need to be repeated $2^m$ times or require $2^m$ different processors.

Quantum computation and quantum information provide a useful series of challenges at varied levels of difficulty for people devising methods to better manipulate single quantum systems and stimulate the development of new experimental techniques and provide guidance as to the most interesting directions in which to take experiment. Conversely, the ability to control single quantum systems is essential if we are to harness the power of quantum mechanics for applications to quantum computation and quantum information. Despite this intense interest, efforts to build quantum information processing systems have resulted in modest success to date. Small quantum computers, capable of doing dozens of operations on a few quantum bits (or qubits) represent the state of the art in quantum computation. Experimental prototypes for doing quantum cryptography - a way of communicating in secret across long distances - have been demonstrated and are even at the level where they may be useful for some real-world applications. However, it remains a great challenge to develop techniques for making large-scale quantum information processing a reality. (Nielsen, Michael A.; Chuang, Isaac L. Quantum Computation and Quantum Information: 10th Anniversary Edition (Page 4). Cambridge University Press),

A state of the art of Quantum Technologies has been published by the UK Government Office for Science with the title: "The Quantum Age: technological opportunities". This publication is available from www.gov.uk/go-science.

## SUMMARY OF THE INVENTION

Accordingly, a primary object of the present invention is to provide a Quantum Information Processor based on a novel approach using Dynamical Neural Networks (DNN) to achieve Qubit representation and processing.

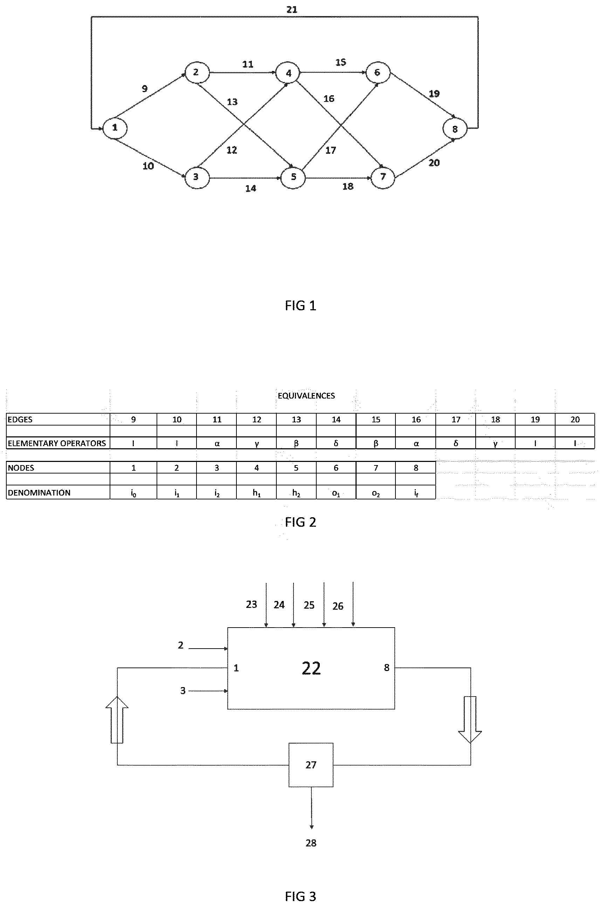

Figure 1 presents a sketch of the DNN that comprises a series of Nodes (1,2,3,4,5,6,7,8) and another series of edges (9,10,11,12,13,14,15,16,17,18,19,20) which form with the link 21 an Artificial Neural Network (ANN) which supports dynamical transitions at the Nodes and Edges

In DNN system, a qubit is stored using the feedback mechanism of the link 21 that allows the complex signal to remain stable within the device. The signal could be based in any form of wave (electromagnetic, sound, etc.) and is characterized by its frequency and/or phase. In the present invention we'll focus in electromagnetic waves as mean to represent the complex signals.

So far, experimental Quantum Information Processors have been implemented using atomic beams, trapped ions and bulk nuclear magnetic resonance. Examples of these systems are described in "Quantum Information Processors, Error-Correction and Networking: Quantum Optical approaches" by Thomas Pellizari, pp. 270-310 and "Quantum Computation with Nuclear Magnetic Resonance" by Isaac Chuang pp. 311-339 of "Introduction to Quantum Computation and Information" ibid. However, these systems have the disadvantage that their architecture cannot be easily scaled to accommodate large number of qubits, i.e. more than about 10 qubits. Quantum Information Processors may also be implemented using solid-state systems employing semiconductor nanostructures and Josephson junctions.

A generally recognized problem is that quantum computation, and indeed any systems involving sensitive information processing, requires a quite electromagnetic or any other perturbation of the environment to operate. If the system interacts with the environment, then it loses coherence and quantum parallelism is destroyed.

The present invention seeks to provide a Quantum Information Processor providing a very robust implementation against perturbations with the environment achieving so big coherence times, several orders of magnitude over current quantum devices implementations.

According to a first aspect of the present invention is provided a Quantum Information Processor for transforming a first state into a second state comprising means for defining a first quantum State, means for defining a second quantum State said means for defining the transformation from the said first and second quantum means for preparing the first state and means for controlling coupling between said first and second quantum States so as to transform said first state into said second state.

The first state may be defined by a signal characterized by its frequency and phase that will be feed at the first Node 1 of the DNN. In the last two decades, the evolution of modern applications of analogue signal processing has followed the trends of so-called current mode, when signals, representing the information being processed, are in the form of electric currents. In contrast to the conventional voltage mode, which utilizes electric voltages, the current mode circuits can exhibit under certain conditions - among other things - higher bandwidth and better signal linearity. Since they are designed for lower voltage swings, smaller supply voltages can be used. For more information of the potential technologies to apply see; "Active Elements for Analog Signal Processing: Classification, Review, and New Proposals" by Dalibor BIOLEK1, Raj SENANI, Viera BIOLKOVA, Zdenek KOLKA, (RADIOENGINEERING, VOL. 17, NO. 4, DECEMBER 2008)

The Quantum Information Processor may comprise Nodes that will support the Sum operation of the signals and Edges that will realize the multiplicative operation over the signal. The Edges support the treatment of the signal by means of multiplicative devices associated to the Edges. Both Nodes and Edges may be substantially very low noise devices.

The means for controlling coupling between said first and second quantum States may comprise means for adjusting the multiplicative devices at the Edges between said first and second quantum States. The second State will be feedforward via the link 21 to the Node 1 to finally stabilize the signal in the new State.

The Unitary transformations between states will be performed by the application of an initial operator carrying the necessary parameters to obtain the matrix searched followed by the Identity matrix previously obtained.

The means for defining said first and second quantum States may be configured to exhibit maximal measurement accuracy.

The Quantum Information Processor may comprise means for measuring the signal on at least one of, and preferably both, said first and second quantum States. The means for measuring attributes (frequency and/or phase) of the signal may comprise several technical solutions depending of the technique being implemented to represent the signal.

According to a second aspect of the present invention there is provided a Quantum Information Processor for transforming a first state into a second state comprising an array of elements, each element of the array comprising means for defining a first quantum State, means for defining a second quantum State, said means for defining said first and second quantum States being arranged so as to define first and second basis states of a quantum bit, means for preparing a quantum bit state as a superposition of said first and second basis states, said elements being arranged so as to cause entanglement of the quantum bits of said elements of said array, means for preparing said first state as an entangled superposition of quantum bit states and means for controlling coupling between first and second quantum States of at least one element so as to transform said first state into said second state.

The controlling of the coupling between said first and second quantum States may comprise the multiplicative device applied simultaneously to the Edges carrying the signals at the different Quantum Information Processors that constitutes the Array. Figure 10 presents a quantum system built up from DNNs units and its control systems. Also, a potential optical interface to allow chip to chip or external applications interfaces (for applications as Quantum cryptography) is contemplated.

It is to be understood that both the foregoing general description and the following detailed description are exemplary and are intended to provide further explanation of the invention as claimed. Other advantages and features of the invention will be apparent from the following description, drawings and claims.

## BRIEF DESCRIPTION OF DRAWING

The features of the invention believed to be novel are set forth with particularity in the appended 7 claims. The invention itself, however, may be best understood by reference to the following detailed description of the invention, which describes an exemplary embodiment of the invention, taken in conjunction with the accompanying drawings, in which:

Fig. 1 is a schematic of the Dynamical Neural Network architecture.
Fig. 2 is the table of equivalences of the numbers used in Fig 1 and the symbols used in the calculations.
Fig. 3 is the schematic of the DNN with the control lines that will introduce the elementary operators and the input and measurements lines.
Fig. 4 presents the Pauli Matrices corresponding to the different operators as well as Hadamard Matrix operation
Fig. 5 is the schematic of a 3-qubit Quantum Information Processor that comprises an array of three coupled quantum DNN units, DNN1, DNN2, DNN3.
Fig. 6 is a schematic of the arrangement for a complete system comprising several DNNs arrays with the necessary Interfaces with the external world via Classical I/O control lines and Photon Interfaces.
Fig 7 presents a conceptual stack that illustrates the functional flow of factoring 8704143553785700723 in a quantum computing environment using the Software Stack QSharp® from Microsoft Corporation.

## DETAILED DESCRIPTION OF THE INVENTION

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

Reference will now be made to the drawing figures to describe the present invention in detail.

Reference is made to Fig. 1 which is a schematic view of the architecture of the Dynamical Neural network. In this figure are represented the Nodes (1,2,3,4,5,6,7,8) and the edges (9,10,11,12,13,14,15,16,17,18,19,20) of the DNN.

The initial feeding signal is applied to the Node 1 that is linked to the final Node 8 by an additional edge 21 that allows the stabilization of the signal.

The Fig 2 presents the table of equivalences between the numbers of Fig 1 and the symbols used in the subsequent calculations.

The Nodes in the DNN perform a Sum operation over the signals arriving to the Nodes. The Edges perform a multiplication operation over the signal going thru the Nodes by means of an elementary operator. Taking in account the dimension of the vector representing the signal (a qubit), elemental operators are matrices 2x2.

The relations that can be established for the different Nodes and Edges with the operations above established are.

$$h_1 = \alpha i_1 + \gamma i_2$$

$$h_2 = \beta i_1 + \delta i_2$$

$$o_1 = \beta h_1 + \alpha h_2 = \beta(\alpha i_1 + \gamma i_2) + \alpha(\beta i_1 + \delta i_2)$$

$$o_2 = \delta h_1 + \gamma h_2 = \delta(\alpha i_1 + \gamma i_2) + \gamma(\beta i_1 + \delta i_2)$$

$$\begin{pmatrix} O_1 \\ O_2 \end{pmatrix} = \begin{pmatrix} 2\alpha\beta & \beta\gamma + \alpha\delta \\ \delta\alpha + \gamma\beta & 2\gamma\delta \end{pmatrix} \begin{pmatrix} i_1 \\ i_2 \end{pmatrix}$$

A single operator will be defined as stated above as a 2x2 Matrix in the form

$$\alpha = \begin{pmatrix} \alpha_{00} & \alpha_{01} \\ \alpha_{10} & \alpha_{11} \end{pmatrix} \qquad \alpha_{ij} => \text{Complex Numbers}$$

The signal is represented by a Quantum State:

$|\varphi> = a|0> + b|1>$ with a and b complex numbers

[0040] The Sum and Multiplication operation are defined in the Hilbert Space of Quantum States and using Dirac Notation:

$$|0> = \begin{pmatrix} 1 \\ 0 \end{pmatrix} \ , \quad |1> = \begin{pmatrix} 0 \\ 1 \end{pmatrix} , \qquad |\varphi> = \begin{pmatrix} a \\ b \end{pmatrix}$$

NODES » $\varphi_i + \varphi_j$

EDGES » $\alpha\varphi$

The link 21 establish a feedforward of the signal from the Node $i_f$ (8) to the Node $i_0$ (1) so we can write:

$$i_1 + i_2 = \varphi = o_1 + o_2$$

An taking in account the above relations introduced by the elementary operators:

$$o_1 + o_2 = (2\alpha\beta + \delta\alpha + \gamma\beta)i_1 + (2\gamma\delta + \beta\gamma + \alpha\delta)i_2$$

This is the general form of the complete operator that makes the Unitary operator of the evolution of the signal.

A general solution to the above both conditions establishes that:

$$(2\alpha\beta + \delta\alpha + \gamma\beta) = (2\gamma\delta + \beta\gamma + \alpha\delta) = I$$

Being I as usual the identity matrix under multiplication or Pauli $\sigma_0$.

$$I = \begin{pmatrix} 1 & 0 \\ 0 & 1 \end{pmatrix}$$

To simplify initially the calculations to validate the approach presented let's make:
$\delta = \alpha$ and $\gamma = \beta$
In this case we obtain the particular relation:

$$o_1 + o_2 = (2\alpha\beta + \alpha\alpha + \beta\beta)i_1 + (2\beta\alpha + \beta\beta + \alpha\alpha)i_2$$

Calling A = $(2\alpha\beta + \alpha\alpha + \beta\beta)$ and B = $(2\beta\alpha + \beta\beta + \alpha\alpha)$
We have:

$$o_1 + o_2 = A\,i_1 + B\,i_2$$

And so,

$$A = B = I = \begin{pmatrix} 1 & 0 \\ 0 & 1 \end{pmatrix}$$

That means that the Commutator $[\alpha, \beta]$ *is Zero*, And the elemental operators commutate: $\alpha\beta - \beta\alpha = 0$
One solution of the above equation writing it as:

$$A = B = I = (\alpha + \beta)(\alpha + \beta)$$

Is in terms of the components of $\alpha$ and $\beta$:

$$\alpha_{00} + \beta_{00} = 1$$

$$\alpha_{01} + \beta_{01} = 0$$

$$\alpha_{10} + \beta_{10} = 0$$

$$\alpha_{11} + \beta_{11} = 1$$

It's straightforward to check the above equations fulfill the $\alpha\beta - \beta\alpha = 0$ requirement. This finalizes the conditions to obtain the stabilization of the signal required for the maintenance of the coherent state.
Reference is made to Fig. 3 in which we have summarize the Single Qubit System represented by the box 22 with the controls lines 23, 24, 25 and 26 that introduces the elementary operators in the device, the input lines 1, 2 and 3 as defined previously and the measurement device 27 and the result of the measurement 28. Measurement line as we can expect for a quantum measurement will transform the signal in its base vectors components and the state will suffer a decoherence.
If we want to use the signal as a coherent signal for example to be converted in a photon for crypto communication applications, we must make the interface directly from the $i_f$ Node.

When the system is sufficiently low noise, a qubit may be prepared as a superposition of quantum states. The quantum states remain coherent long enough to permit manipulation of the qubit. A process by which a qubit is prepared and manipulated will now be described:

Firstly, an initial state, for example $|\psi_i\rangle = |0\rangle$, is prepared, feeding the two entry lines with a signal considered in the ground state and leaving the system in the state $|0\rangle$.

Secondly, a unitary transformation Ut of the initial state is performed. This comprises applying elementary operators $\alpha$ and $\beta$ to the control gates. This transforms the initial state $|0\rangle$ into a final state $|\psi_f\rangle$ consisting of mixture of states $|0\rangle$ and $|1\rangle$.

We'll explain now how to obtain the Unitary transforms from our elementary operators. The canonical transformations between states will be performed by the application of an initial operator carrying the necessary parameters to obtain the matrix searched followed by the Identity matrix previously obtained.

If we recover the Identity:

$$o_1 + o_2 = A\,i_1 + B\,i_2$$

Using the same simplification that for the identity:

$$U_t = A = B$$

And taking in account that $A = B = (\alpha + \beta(\alpha + \beta)$

The solution is $(\alpha + \beta) = Square\ Root\ (U_t)$

So, the problem has been solved looking for the square roots of the Unitary operators,

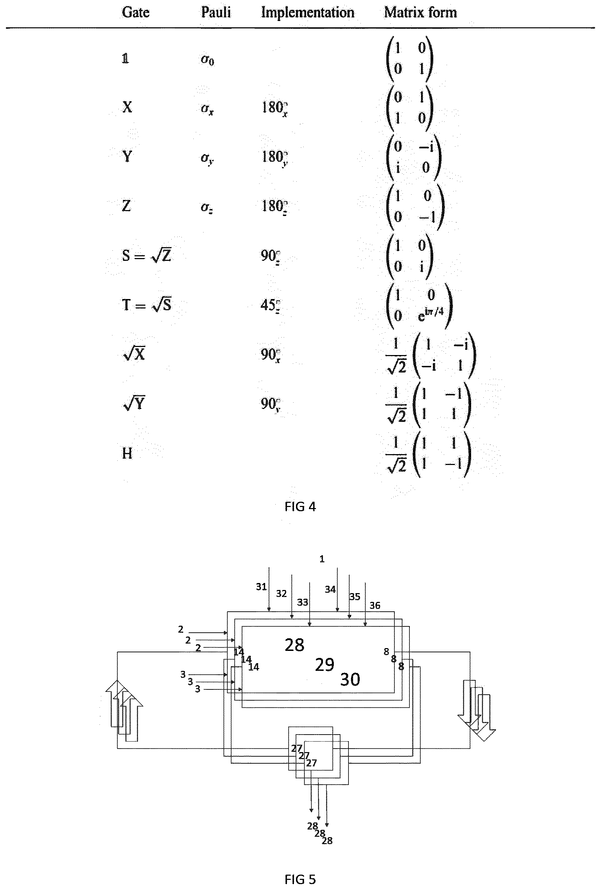

Fig 4 presents the Pauli Matrices corresponding to the different operators as well as Hadamard Matrix operation.

As an example, the overall effect of the subsequent application of the operators HSSH which corresponds to applying first a Hadamard gate, then a phase gate, then another phase gate, and finally a Hadamard gate. Multiplying out the constituent propagators;

$$\frac{1}{\sqrt{2}}\begin{pmatrix}1 & 1\\1 & -1\end{pmatrix}\begin{pmatrix}1 & 0\\0 & i\end{pmatrix}\begin{pmatrix}1 & 0\\0 & i\end{pmatrix}\frac{1}{\sqrt{2}}\begin{pmatrix}1 & 1\\1 & -1\end{pmatrix} = \begin{pmatrix}0 & 1\\1 & 0\end{pmatrix}$$

to find that this network is equivalent to a NOT gate. Since SS = $\sigma_z$ this network can also be written as $H\sigma_z H = \sigma_x$, or even more simply as HZH = X.

Other useful identities include $X^2 = Y^2 = Z^2 = H^2 = I$ and HXH = Z.

Formal calculation of the Square roots of the operators are outside of the scope of this patent but using standard mathematical applications as WolframAlpha we can obtain any of them.

For example, the Square root of the Hadamard gate has the expression:

$$\left(\frac{1}{4}+\frac{i}{4}\right)\begin{pmatrix}-i\left(2i+\sqrt{2}\right) & -i\sqrt{2}\\ -i\sqrt{2} & i\left(-2i+\sqrt{2}\right)\end{pmatrix}$$

And so, we have:

$$\alpha_{00} + \beta_{00} = \left(\frac{1}{4}+\frac{i}{4}\right)\left(-i\left(2i+\sqrt{2}\right)\right)$$

$$\alpha_{01} + \beta_{01} = \left(\frac{1}{4}+\frac{i}{4}\right)\left(-i\sqrt{2}\right)$$

$$\alpha_{10} + \beta_{10} = \left(\frac{1}{4} + \frac{i}{4}\right)\left(-i\sqrt{2}\right)$$

$$\alpha_{11} + \beta_{11} = \left(\frac{1}{4} + \frac{i}{4}\right)\left(i\left(-2i + \sqrt{2}\right)\right)$$

Referring to Figure 5, a 3-qubit Quantum Information Processor comprises an array of three coupled quantum DNN units, 28 (DNNi), 29 (DNN$_2$) and 30 (DNN$_3$).

Each coupled quantum DNN unit DNN$_1$, DNN$_2$, DNN$_3$ defines a qubit, labelled A, B and C respectively. Each qubit is prepared in a $|0\rangle$ state in a manner hereinbefore described. The Hadamard transform $U_H$ is performed by application of the appropriately elementary operators as previously described. Thus, each state is transformed from $|0\rangle$ to $2^{-U}{}_H (|0\rangle + |1\rangle)$. Therefore, the overall state of the system is:

$$|\psi\rangle_{ABC} = 8^{-1/2}\left(|000\rangle, |001\rangle, |010\rangle, |011\rangle, |100\rangle, |101\rangle, |110\rangle, |111\rangle\right)$$

As hereinbefore described, each qubit can be transformed by application of multiplicative operations to the DNNs. However, a transformation of a qubit, such as qubit A, may also be conditional on the state of a neighbouring qubit, in this case qubit B.

Global, time-dependent elemental operators may be applied to the DNNs array using the multiplicative gates 31, 32, 33, 34, 35 and 36, to control which qubits undergo a transformation.

Thus, the array can be set up in any initial state using a global operator with the appropriate elemental operators applied to each DNN unit.

It will be appreciated that the 3-qubit system described hereinbefore may be extended to an n-qubit system, comprising n-coupled quantum DNN units.

It will also be appreciated that other modifications may be made to the 3 (n) -qubit array. For example, some or all the DNNs units could have a common measurement system.

With the array arrangement mentioned we can implement any 2(n) qubit Operator.

A 2-qubit system can be used as a controlled-NOT (CNOT) gate which performs an operation $U_{CNOT}$. The 2-qubit system may be made by modifying the 3-qubit system described earlier by removing the third quantum DNN unit.

Alternatively, the 3-qubit system can be used as a 2-qubit system by simply using only the first and second quantum DNN units.

The first DNN unit defines an operator denoted T, while the second DNN unit defines a control operator C. If the control qubit C is in state $|1\rangle$, then the state of the target qubit T is flipped, otherwise if the control qubit C is in state $|0\rangle$, then the state of the target qubit is left unchanged. Thus, the effect of the operation $U_{CNOT}$ is:

$$U_{CNOT}|0\rangle_C|0\rangle_T = |0\rangle_C|0\rangle_T$$

$$U_{CNOT}|0\rangle_C|1\rangle_T = |0\rangle_C|1\rangle_T$$

$$U_{CNOT}|1\rangle_C|0\rangle_T = |1\rangle_C|1\rangle_T$$

$$U_{CNOT}|1\rangle_C|1\rangle_T = |1\rangle_C|0\rangle_T$$

The state of the control qubit C does not change when performing the $U_{CNOT}$ operation. Furthermore, repeating the operation returns the target bit T to its original state.

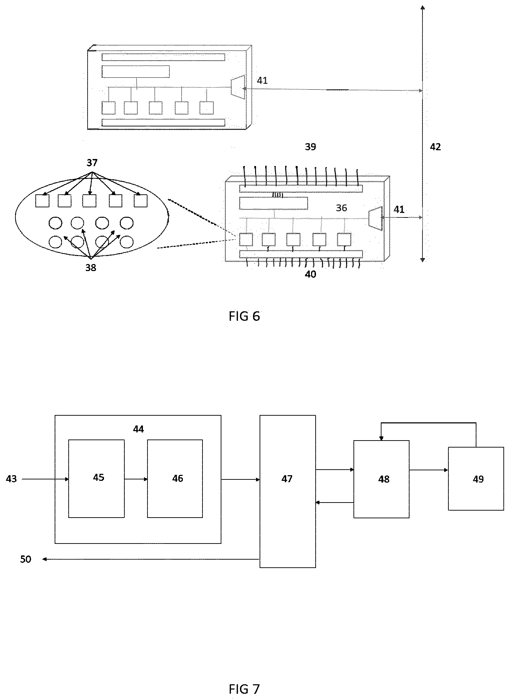

Reference is made to Fig. 6 in which we have summarize the arrangement for a complete system comprising several DNNs arrays 37 comprising theirs measurement devices 38 with the necessary Interfaces with the external world via Classical I/O control lines39 and 40 and Photon Interfaces 41.

Each system has an internal bus to communicate between the DNN logic and the classical logic 36 and the external bus 42 to carry the photon signals chip to chip or to other third-party devices.

The software package that it's possible to use to quickly develop applications with the device presented in the invention is the Software Stack QSharp® from Microsoft Corporation.

Reference is made to Fig 7 that presents a conceptual stack that illustrates the functional flow of factoring 8704143553785700723 in a quantum computing environment.

In this figure the factoring number is input at 43. The block of the Compilation process is show in 44 and is composed by the 45 Algorithmic Layer (Q# Code). Source Code and the 46 Fault Tolerant Quantum Computer (Logical Gates). Compilation Target.

The 47 Interface Computer (Physical Gate Sequence), 48 Control Computer (Pulse Sequences + Control Flow) and 49 is the invention device.

The two factors numbers of the input 224304685723 x 38805001 will be obtained at 50. There are several broad stages of programming such a quantum computation. The first, and arguably most challenging phase, is specifying the problem that one wishes to solve. In this case, the problem is to factor the number 8704143553785700723 into a product of two prime numbers. The next step involves designing an algorithm for solving this computational problem. In this case, Shor's famous quantum factoring algorithm can be used to find the factors. This algorithm is expressed in Q# and then a sequence of quantum operations is output that could be run on the invention device.

The subsequent step takes the operations emitted by Q# and translates them using templates specified by the quantum error correction method chosen into the control lines that the basic hardware can execute. This process involves replacing every logical qubit described in the previous model with a host of physical qubits that are used to store and protect the information within a single qubit in a redundant fashion that can resist local errors on the constituent physical qubits long enough for such errors to be detected and corrected. Just as the logical qubits described by the Q# code need to be replaced with many physical qubits, similarly each quantum gate described in the output needs to be translated into a sequence of physical gates that act upon the physical qubits. For this reason, the output of Q# is seldom the final target for quantum computing and further levels of abstraction are needed to execute the code on hardware in an oblivious fashion. The physical gate sequence is then loaded into an ordinary computer that sends these instructions down to a control computer that interfaces directly with the quantum computer.

The final step in this process involves the interface computer first streaming the control instructions as needed to the invention system. This must be done while correcting any errors that are observed through quantum error correction. Cryogenic FPGAs or other exotic hardware may be needed at the core of the invention system to perform these steps within the stringent time requirements imposed by the rate at which errors could appear in the invention device.

## Claims

1. A Quantum Information Processor for transforming a first state ($|\psi_i\rangle$) into a second state ($|\psi_f\rangle$) comprising:

    means (1) for defining the first state ($|\psi_i\rangle$);
    means (8) for defining the second state ($|\psi_f\rangle$);
    said means for defining said first and second quantum states being arranged to define first and second basis states ($|0\rangle$, $|1\rangle$; $|0'\rangle$, $|1'\rangle$) of a quantum bit;
    means (2, 3, 4, 5, 6, 7) for preparing said first state ($|\psi_i\rangle$) as a superposition of said first and second basis states; and
    means (9, 10, 11, 12, 13, 14, 15, 16, 17, 18, 19, 20) for controlling coupling between said first and second quantum states of at least one element so as to transform said first state ($|\psi_i\rangle$) into said second state ($|\psi_f\rangle$).

2. A Quantum Information Processor according to claim 1, wherein said first basis state ($|0\rangle$; $|0'\rangle$) is defined by a first given signal at the minimum parametric space value.

3. A Quantum Information Processor according to claim 1 or 2, wherein said second basis state ($|1\rangle$, $|1'\rangle$) is defined by a second given signal at the maximum parametric space value.

4. A quantum computer according to any preceding claim, wherein the means for controlling coupling between said first and second quantum states of at least one element comprise means for adjusting the multiplicative devices (9, 10, 11, 12, 13, 14, 15, 16, 17, 18, 19, 20) associated to the Edges between said first and second quantum states (1,8).

5. A quantum computer according to any preceding claim comprising means (27, 28) for measuring signals on at least one of said first and second quantum states (1, 8).

6. A quantum computer for transforming a first state ($|\psi_i\rangle$) into a second state ($|\psi_f\rangle$) comprising:

an array of elements (28, 29,30), each element of the array comprising:

means (1) for defining a first quantum state;
means (8) for defining a second quantum state;
said means for defining said first and second quantum states being arranged to define first and second basis states ($|0\rangle$, $|1\rangle$;
$|0'\rangle$, $|1'\rangle$) of a quantum bit; and
means for preparing a quantum bit state as a superposition of said first and second basis states;
said elements being arranged so as to cause entanglement of
the quantum bits of said elements of said array;

means for preparing said first state ($|\psi_i\rangle$) as an entangled superposition of quantum bit states; and
means for controlling coupling between first and second quantum states of at least one element so as to transform said first state ($|\psi_i\rangle$) into said second state ($|\psi_f\rangle$).

7. Method of operating a quantum computer comprising means (1) for defining a first quantum state, means (8) for defining a second quantum state, said means for defining said first and second quantum states being arranged so as to define first and second basis states ($|0\rangle$, $|1\rangle$; $|0'\rangle$, $|1'\rangle$), the method comprising: preparing a first state ($|\psi_i\rangle$) as a superposition of said first and second basis states ($|0\rangle$, $|1\rangle$; $|0'\rangle$, $|1'\rangle$) and controlling coupling between said first and second quantum states of at least one element so as to transform said first state($|\psi_i\rangle$) into said second state ($|\psi_f\rangle$).

FIG 1

| EQUIVALENCES | | | | | | | | | | | | |
|---|---|---|---|---|---|---|---|---|---|---|---|---|
| EDGES | 9 | 10 | 11 | 12 | 13 | 14 | 15 | 16 | 17 | 18 | 19 | 20 |
| | | | | | | | | | | | | |
| ELEMENTARY OPERATORS | I | I | $\alpha$ | $\gamma$ | $\beta$ | $\delta$ | $\beta$ | $\alpha$ | $\delta$ | $\gamma$ | I | I |
| | | | | | | | | | | | | |
| NODES | 1 | 2 | 3 | 4 | 5 | 6 | 7 | 8 | | | | |
| | | | | | | | | | | | | |
| DENOMINATION | $i_0$ | $i_1$ | $i_2$ | $h_1$ | $h_2$ | $o_1$ | $o_2$ | $i_f$ | | | | |

FIG 2

FIG 3

| Gate | Pauli | Implementation | Matrix form |
|---|---|---|---|
| $\mathbb{1}$ | $\sigma_0$ | | $\begin{pmatrix} 1 & 0 \\ 0 & 1 \end{pmatrix}$ |
| X | $\sigma_x$ | $180^\circ_x$ | $\begin{pmatrix} 0 & 1 \\ 1 & 0 \end{pmatrix}$ |
| Y | $\sigma_y$ | $180^\circ_y$ | $\begin{pmatrix} 0 & -i \\ i & 0 \end{pmatrix}$ |
| Z | $\sigma_z$ | $180^\circ_z$ | $\begin{pmatrix} 1 & 0 \\ 0 & -1 \end{pmatrix}$ |
| $S = \sqrt{Z}$ | | $90^\circ_z$ | $\begin{pmatrix} 1 & 0 \\ 0 & i \end{pmatrix}$ |
| $T = \sqrt{S}$ | | $45^\circ_z$ | $\begin{pmatrix} 1 & 0 \\ 0 & e^{i\pi/4} \end{pmatrix}$ |
| $\sqrt{X}$ | | $90^\circ_x$ | $\frac{1}{\sqrt{2}} \begin{pmatrix} 1 & -i \\ -i & 1 \end{pmatrix}$ |
| $\sqrt{Y}$ | | $90^\circ_y$ | $\frac{1}{\sqrt{2}} \begin{pmatrix} 1 & -1 \\ 1 & 1 \end{pmatrix}$ |
| H | | | $\frac{1}{\sqrt{2}} \begin{pmatrix} 1 & 1 \\ 1 & -1 \end{pmatrix}$ |

FIG 4

FIG 5

41

42

37

39

36

41

38

40

FIG 6

44

43

45

46

47

48

49

50

FIG 7

Europäisches
Patentamt

European
Patent Office

Office européen
des brevets

# EUROPEAN SEARCH REPORT

Application Number

EP 18 38 2638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M. Schuld et al: "Circuit-centric quantum classifiers", arXiv:1804.00633v1, 2 April 2018 (2018-04-02), XP080866898, Retrieved from the Internet: URL:https://arxiv.org/abs/1804.00633v1 [retrieved on 2018-04-03] * sections II-IV * ----- | 1-7 | INV. G06N3/06 G06N10/00 G06N3/063 |

TECHNICAL FIELDS
SEARCHED      (IPC)

G06N

The present search report has been drawn up for all claims

| Place of search | Date of completion of the search | Examiner |
|---|---|---|
| The Hague | 1 March 2019 | Douarche, Nicolas |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. A. NIELSEN ; I. L. CHUANG.** Quantum Computation and Quantum Information. Cambridge Univ. Press, 2000
- **NIELSEN, MICHAEL A. ; CHUANG, ISAAC L.** Quantum Computation and Quantum Information. Cambridge University Press, 4
- **THOMAS PELLIZARI.** *Quantum Information Processors, Error-Correction and Networking: Quantum Optical approaches,* 270-310
- **ISAAC CHUANG.** *Quantum Computation with Nuclear Magnetic Resonance,* 311-339
- **DALIBOR BIOLEK1 ; RAJ SENANI ; VIERA BIOLKOVA ; ZDENĚK KOLKA.** Active Elements for Analog Signal Processing: Classification, Review, and New Proposals. *RADIOENGINEERING,* December 2008, vol. 17 (4